# EUROPEAN PATENT SPECIFICATION

(11) **EP 3 546 513 B1**
(45) Date of publication and mention of the grant of the patent: **30.09.2020**
(21) Application number: 18203879.4
(22) Date of filing: 31.10.2018
(51) Int. Cl.: C08L 9/00, B60C 1/00, C08L 9/06

(54) **RUBBER COMPOSITION FOR TIRE TREAD AND TIRE INCLUDING SAME**
GUMMIZUSAMMENSETZUNG FÜR REIFENLAUFFLÄCHE UND REIFEN DAMIT
COMPOSITION DE CAOUTCHOUC POUR BANDE DE ROULEMENT DE PNEU ET PNEU LA COMPRENANT

(30) Priority: 29.03.2018 KR 20180036506
(43) Date of publication of application: 02.10.2019
(73) Proprietor: Hankook Tire Co., Ltd., Seoul 135-723 (KR)
(72) Inventor: Jung, Jae Hyun, 34127 Daejeon (KR); Chung, Hae Kwang, 34127 Daejeon (KR); Kang, Chang Hwan, 34127 Daejeon (KR)
(74) Representative: Petraz, Gilberto Luigi

(56) References cited:
- EP-A1- 2 743 298
- EP-A1- 3 109 065
- EP-A1- 3 109 066
- US-A1- 2013 096 248
- US-A1- 2013 267 640
- US-A1- 2014 243 448
- US-A1- 2018 079 895

## Description

### BACKGROUND OF THE INVENTION

### Field of the invention

The present invention relates to a rubber composition for a tire tread, the rubber composition which simultaneously improves handling performance and braking performance on a wet road surface or on an ice and snow road surface, and a tire including the rubber composition for the tire tread.

### Description of Related Art

Heavy snow in winter has recently been frequently occurred due to abnormal climate or the like, and the risk of an accident will get much greater on the snow road or the icy road since a snow road or an icy road is more slippery than a general road surface. Therefore, there is a tendency that demand in the tires for winter has steadily been increased due to improvements in safety consciousness of consumers as well as expansion in mandatory mounting regulations of tires for winter during the winter season.

There is a trade-off relationship between the handling performance and braking performance of the vehicle in which it is difficult to simultaneously improve handling performance and braking performance of the vehicle which are required for safely driving a vehicle on the wet road surface or the ice and snow road surface in the wintertime. In order to maintain the handling performance and braking performance on a snow-covered road surface or the icy road, it is important that rubber for the tire tread has appropriate levels of hardness and dynamic modulus. Accordingly, a combination of various plasticizers such as processing oil, resin and others has been mainly used in an existing rubber composition for the tire tread for four seasons or winter.

When a large amount of the processing oil is used in the rubber composition for the tire tread, the handling performance and braking performance on the ice and snow road surface may be improved. However, there is a problem that the handling performance and braking performance on the wet road surface are relatively lowered. Further, when resin is applied to the rubber composition for the tire tread, the handling performance and braking performance on the wet road surface may be improved. However, there is a problem that the handling performance and braking performance on the ice and snow road surface are relatively lowered. Therefore, there have been attempts to complement such a trade-off relationship by applying a combination of the processing oil and resin to the rubber composition for the tire tread, their effects have not been great.

Document EP 3109065 A1 describes a tire with tread for low temperature performance and wet traction. Document EP 3109066 A1 describes a tire with tread for combination of low temperature performance and for wet traction. Document US 2018/079895 A1 describes tread enhancement additives. Document EP 2743298 A1 describes a rubber composition for tire tread and tire manufactured by using the same. Document US 2013/096248 A1 describes a tire tread for high performance tires. Document US 2014/243448 A1 describes a tire with improved grip on wet ground. Document US 2013/267640 A1 describes a snow tire tread.

To overcome problems of an existing technology, it is required to develop a technology related to the rubber composition for the tire tread which is capable of simultaneously improving the handling performance and the braking performance on the wet road surface or the ice and snow road surface.

### [Prior art documents]

Korean Patent Application Laid-Open No. 10-2011-0073063A. Further patent applications: EP 3109065 A1, EP 3109066 A1, US 2018/079895 A1, EP 2743298 A1, US 2013/096248 A1, US 2014/243448 A1, US 2013/267640 A1.

### SUMMARY OF THE INVENTION

The present invention provides a rubber composition for a tire tread, the rubber composition which simultaneously improves handling performance and braking performance on a wet road surface or an ice and snow road surface.

The present invention also provides a tire including the rubber composition for the tire tread.

To achieve the objectives, an aspect of the present invention provides a rubber composition for a tire tread, the rubber composition comprising: a raw material rubber including 20 to 50 parts by weight of a first styrene butadiene rubber, 20 to 50 parts by weight of a second styrene butadiene rubber, and 10 to 40 parts by weight of a butadiene rubber (BR); and 80 to 180 parts by weight of a reinforcing filler, 2 to 50 parts by weight of a natural oil, and 2 to 30 parts by weight of a hydrocarbon resin with respect to 100 parts by weight of the raw material rubber.

The first styrene butadiene rubber has a glass transition temperature (Tg) of - 40 °C or higher, and includes 30 to 50 wt% of styrene and 10 to 30 wt% of vinyl.

The second styrene butadiene rubber has a glass transition temperature (Tg) of - 60 °C or lower, and includes 5 to 20 wt% of styrene and 20 to 40 wt% of vinyl.

The reinforcing filler may include 10 to 40 parts by weight of carbon black and 40 to 170 parts by weight of silica with respect to 100 parts by weight of the raw material rubber.

The silica may be a precipitated silica having an adsorption specific surface area of cetyltrimethylammonium bromide (CTAB) of 150 to 180 m²/g and an adsorption specific surface area of nitrogen of 160 to 190 m²/g.

The natural oil may be any one selected from the group consisting of soybean oil, modified soybean oil, sunflower oil, modified sunflower oil, canola oil, modified canola oil, rapeseed oil, modified rapeseed oil, and a mixture thereof.

The hydrocarbon resin may be any one selected from the group consisting of a coumarone-indene resin, a terpene resin, a terpene-phenol resin, an aromatic modified terpene resin, a phenol-formaldehyde resin, a C₅-C₉ aliphatic hydrocarbon resin, a C₇-C₉ aromatic hydrocarbon resin, a copolymer resin, and a mixture thereof.

Another aspect of the present invention may provide a tire manufactured by including the rubber composition for the tire tread.

The tire including the rubber composition for the tire tread according to the present invention has an effect of simultaneously improving the handling performance and braking performance on the wet road surface or the ice and snow road surface.

### DESCRIPTION OF EXEMPLARY EMBODIMENTS

Hereinafter, embodiments of the present invention will be described in detail. However, these embodiments are only exemplary, and the present invention is not limited thereto, but defined by the scope of claims to be described later.

In the description of the present invention, if detailed descriptions of related disclosed art or configuration are determined to unnecessarily make the subject matter of the present invention obscure, they will be omitted.

Terms such as first, second, A, B, (a), and (b) may be used to describe components of the embodiments of the present invention. Such terms are used for merely discriminating the corresponding components from other components and the corresponding components are not limited in their inherent characteristics, order, or sequence by the terms.

A rubber composition for a tire tread according to an embodiment of the present invention includes a raw material rubber, a high reinforcing filler, a natural oil, and a hydrocarbon resin.

Hereinafter, the rubber composition for the tire tread will be described in detail by the constitutional components.

### (1) Raw material rubber

In the rubber composition for the tire tread, the raw material rubber includes a first styrene butadiene rubber, a second styrene butadiene rubber, and a butadiene rubber (BR).

The first styrene butadiene rubber may be included in an amount of 20 to 50 parts by weight with respect to 100 parts by weight of the raw material rubber. There may be a problem that braking performance on the wet road surface is lowered when the first styrene butadiene rubber is included in an amount of less than 20 parts by weight, and there may be a problem that braking performance on the ice and snow road surface is lowered when the first styrene butadiene rubber is included in an amount of more than 50 parts by weight.

The first styrene butadiene rubber includes 30 to 50 wt% of styrene and 10 to 30 wt% of vinyl. Further, the first styrene butadiene rubber has a glass transition temperature (Tg) of -40 °C or higher, preferably -40 to -20 °C.

There may be a problem that braking performance on the wet road surface is lowered when the first styrene butadiene rubber includes less than 30 wt% of styrene, and there may be a problem that braking performance on the ice and snow road surface is lowered when the first styrene butadiene rubber includes more than 50 wt% of styrene.

There may be a problem that braking performance on the wet road surface is lowered when the first styrene butadiene rubber includes less than 10 wt% of vinyl, and there may be a problem that braking performance on the ice and snow road surface is lowered when the first styrene butadiene rubber includes more than 30 wt% of vinyl.

There may be a problem that braking performance on the wet road surface is lowered when the first styrene butadiene rubber has a glass transition temperature (Tg) of lower than -40 °C.

The second styrene butadiene rubber is included in an amount of 20 to 50 parts by weight with respect to 100 parts by weight of the raw material rubber. There may be a problem that braking performance on the ice and snow road surface is lowered when the second styrene butadiene rubber is included in an amount of less than 20 parts by weight, and there may be a problem that braking performance on the wet road surface is lowered when the second styrene butadiene rubber is included in an amount of more than 50 parts by weight.

The second styrene butadiene rubber includes 5 to 20 wt% of styrene and 20 to 40 wt% of vinyl. Further, the second styrene butadiene rubber may have a glass transition temperature (Tg) of -60 °C or lower, preferably -80 to -60 °C.

There may be a problem that braking performance on the wet road surface is lowered when the second styrene butadiene rubber includes less than 5 wt% of styrene, and there may be a problem that braking performance on the ice and snow road surface is lowered when the second styrene butadiene rubber includes more than 20 wt% of styrene.

There may be a problem that braking performance on the wet road surface is lowered when the second styrene butadiene rubber includes less than 20 wt% of vinyl, and there may be a problem that braking performance on the ice and snow road surface is lowered when the second styrene butadiene rubber includes more than 40 wt% of vinyl.

There may be a problem that braking performance on the ice and snow road surface is lowered when the second styrene butadiene rubber has a glass transition temperature (Tg) of higher than -60 °C.

The butadiene rubber is included in an amount of 10 to 40 parts by weight with respect to 100 parts by weight of the raw material rubber. There may be a problem that wear resistance is lowered when the butadiene rubber is included in an amount of less than 10 parts by weight, and there may be a problem that processability and braking performance are lowered when the butadiene rubber is included in an amount of more than 40 parts by weight.

### (2) Reinforcing filler

In the rubber composition for the tire tread, examples of the reinforcing filler may include carbon black, silica, or a mixture thereof. The reinforcing filler is included in an amount of 80 to 180 parts by weight with respect to 100 parts by weight of the raw material rubber. Specifically, the reinforcing filler may include 10 to 40 parts by weight of carbon black or 40 to 170 parts by weight with respect to 100 parts by weight of the raw material rubber.

There may be a problem that reinforcement properties of the rubber composition are lowered when less than 80 parts by weight of the reinforcing filler is included, and there may be a problem that mixing processability of the rubber composition is lowered when more than 180 parts by weight of the reinforcing filler is included.

There may be a problem that reinforcement properties of the rubber composition are lowered when less than 10 parts by weight of the carbon black is included, and there may be a problem that braking performance on the ice and snow road surface is lowered due to a high hardness of rubber when more than 40 parts by weight of the carbon black is included.

There may be a problem that braking performance on the wet road surface is lowered when less than 40 parts by weight of the silica is included, and there may be a problem that mixing processability of the rubber composition is lowered when more than 170 parts by weight of the silica is included.

The reinforcing filler including the silica and carbon black may be a material prepared by mixing the mixture with the natural oil and hydrocarbon resin in order after obtained a mixture by mixing the raw material rubber with a reinforcing filler prior to the natural oil and hydrocarbon resin when mixing the reinforcing filler with the raw material rubber. Dispersibility of the filler with respect to the raw material rubber may be improved depending on a mixing order of the reinforcing filler.

### (2-1) Carbon black

Specifically, the carbon black may be preferably carbon black of a general purpose furnace (GPF) grade having an adsorption specific surface area of nitrogen (nitrogen surface area per gram, N₂SA) of 30 to 40 m²/g and an oil absorption amount of n-dibutyl phthalate (DBP) of 85 to 95 cc/100 g considering an effect of improving processability and air permeability in addition to an effect of improving reinforcement properties.

The adsorption specific surface area of nitrogen and oil absorption amount of DBP of the carbon black are combined physical requirements that should be satisfied at the same time, wherein it is apprehended that reinforcing performance of a rubber composition for a tire becomes unfavorable due to carbon black, i.e., the filler when the adsorption specific surface area of nitrogen is less than 30 m²/g, and it is apprehended that processability of the rubber composition becomes unfavorable when the adsorption specific surface area of nitrogen is more than 40 m²/g. Moreover, processability of the rubber composition may be lowered when the carbon black has an oil absorption amount of DBP of more than 95 cc/100 g, and reinforcing performance of the rubber composition may become unfavorable due to carbon black, i.e., the filler when the carbon black has an oil absorption amount of DBP of less than 85 cc/100 g.

### (2-2) Silica

The silica may be a precipitated silica and may have an adsorption specific surface area of cetyltrimethylammonium bromide (CTAB) of 150 to 180 m²/g and an adsorption specific surface area of nitrogen of 160 to 190 m²/g.

Reinforcing performance of the rubber composition may become unfavorable due to silica, i.e., the filler when the silica has an adsorption specific surface area of CTAB of less than 150 m²/g, and processability of the rubber composition may become unfavorable when the silica has an adsorption specific surface area of CTAB of more than 180 m²/g. Further, reinforcing performance of the rubber composition may become unfavorable due to silica, i.e., the filler when the silica has an adsorption specific surface area of nitrogen of less than 160 m²/g, and processability of the rubber composition may become unfavorable when the silica has an adsorption specific surface area of nitrogen of more than 190 m²/g.

On the other hand, a coupling agent may be additionally included to improve dispersibility of silica used as the reinforcing filler.

Examples of the coupling agent may include any one selected from the group consisting of a sulfide-based silane compound, a mercapto-based silane compound, a vinyl-based silane compound, an amino-based silane compound, a glycidoxy-based silane compound, a nitro-based silane compound, a chloro-based silane compound, a methacrylic silane compound, and a combination thereof, and the sulfide-based silane compound can be preferably used as the coupling agent.

The sulfide-based silane compound may be any one selected from the group consisting of bis(3-triethoxysilylpropyl) tetrasulfide, bis(2-triethoxysilylethyl) tetrasulfide, bis(4-triexthoxysilylbutyl) tetrasulfide, bis(3-trimethoxysilylpropyl) tetrasulfide, bis(2-trimethoxysilylethyl) tetrasulfide, bis(4-trimexthoxysilylbutyl) tetrasulfide, bis(3-triethoxysilylpropyl) trisulfide, bis(2-triethoxysilylethyl) trisulfide, bis(4-triexthoxysilylbutyl) trisulfide, bis(3-trimethoxysilylpropyl) trisulfide, bis(2-trimethoxysilylethyl) trisulfide, bis(4-trimexthoxysilylbutyl) trisulfide, bis(3-triethoxysilylpropyl) disulfide, bis(2-triethoxysilylethyl) disulfide, bis(4-triexthoxysilylbutyl) disulfide, bis(3-trimethoxysilylpropyl) disulfide, bis(2-trimethoxysilylethyl) disulfide, bis(4-trimexthoxysilylbutyl) disulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 2-trimethoxysilylethyl-N,N-dimethylthiocarbamoyl tetrasulfide, 3-trimethoxysilylpropylbenzothiazole tetrasulfide, 3-triethoxysilylpropylbenzothiazole tetrasulfide, 3-trimethoxysilylpropylmethacrylate monosulfide, 3-triethoxysilylpropylmethacrylate monosulfide, and a combination thereof.

The mercapto silane compound may be any one selected from the group consisting of 3-mercaptopropyltrimethoxysilane, 3-mercaptopropyltriethoxysilane, 2-mercaptoethyltrimethoxysilane, 2-mercaptoethyltriethoxysilane, and a combination thereof.

The vinyl-based silane compound may be any one selected from the group consisting of ethoxy silane, vinyl trimethoxy silane, and a combination thereof.

The amino-based silane compound may be any one selected from the group consisting of 3-aminopropyltriethoxysilane, 3-aminopropyltrimethoxysilane, 3-(2-aminoethyl)aminopropyltriethoxysilane, 3-(2-aminoethyl)aminopropyltrimethoxysilane, and a combination thereof.

The glycidoxy-based silane compound may be any one selected from the group consisting of γ-glycidoxypropyltriethoxysilane, γ-glycidoxypropyltrimethoxysilane, γ-glycidoxypropylmethyldiethoxysilane, γ-glycidoxypropylmethyldimethoxysilane, and a combination thereof.

The nitro-based silane compound may be any one selected from the group consisting of 3-nitropropyltrimethoxysilane, 3-nitropropyltriethoxysilane, and a combination thereof.

The chloro-based silane compound may be any one selected from the group consisting of 3-chloropropyltrimethoxysilane, 3-chloropropyltriethoxysilane, 2-chloroethyltrimethoxysilane, 2-chloroethyltriethoxysilane, and a combination thereof.

The methacrylic silane compound may be any one selected from the group consisting of γ-methacryloxypropyltrimethoxysilane, γ-methacryloxypropylmethyldimethoxysilane, γ-methacryloxypropyldimethylmethoxysilane, and a combination thereof.

The coupling agent may be included in an amount of 1 to 20 parts by weight with respect to 100 parts by weight of the raw material rubber. Processability of rubber or low fuel consumption performance may be lowered due to insufficient improvement in dispersibility of silica when less than 1 part by weight of the coupling agent is included. The low fuel consumption performance may be excellent, but braking performance may become very low since interaction between silica and rubber is too strong when more than 20 parts by weight of the coupling agent is included.

### (3) Natural oil

In the rubber composition for the tire tread, the natural oil may be any one selected from the group consisting of soybean oil, modified soybean oil, sunflower oil, modified sunflower oil, canola oil, modified canola oil, rapeseed oil, modified rapeseed oil, and a mixture thereof.

The natural oil is included in an amount of 2 to 50 parts by weight with respect to 100 parts by weight of the raw material rubber, and it is more preferably that the natural oil is included in an amount of 10 to 40 parts by weight.

There may be a problem that processability during compound mixing is lowered due to an increase in Mooney viscosity when less than 2 parts by weight of the natural oil is included, and there may be a problem that extrusion processability and braking performance on the wet road surface are lowered due to a decrease in Mooney viscosity when more than 50 parts by weight of the natural oil is included.

### (4) Hydrocarbon resin

In the rubber composition for the tire tread, the hydrocarbon resin may be any one selected from the group consisting of a coumarone-indene resin, a terpene resin, a terpene-phenol resin, an aromatic modified terpene resin, a phenol-formaldehyde resin, a C₅-C₉ aliphatic hydrocarbon resin, a C₇-C₉ aromatic hydrocarbon resin, a copolymer, and a mixture thereof.

The hydrocarbon resin is included in an amount of 2 to 30 parts by weight with respect to 100 parts by weight of the raw material rubber, and it is more preferably that the hydrocarbon resin is included in an amount of 10 to 30 parts by weight.

There may be a problem that braking performance on the wet road surface is lowered when less than 2 parts by weight of the hydrocarbon resin is included, and there may be a problem that braking performance on the ice and snow road surface is lowered when more than 30 parts by weight of the hydrocarbon resin is included.

A combination of the hydrocarbon resin and the natural oil may simultaneously improve handling performance and braking performance on the wet road surface or the ice and snow road surface by improving glass transition temperature of rubber while maintaining elasticity at low temperatures due to curing of the natural oil with the raw material rubber.

### Other additives

The rubber composition for the tire tread may further comprise various additives which are selectively additional including a vulcanizing agent, a vulcanization accelerator, a vulcanization acceleration aid, an antiaging agent, an activator, a softener, and others. The various additives may include any materials if the materials are commonly used in the art to which the present invention pertains, and the contents of the additives are not particularly limited since contents of the additives depend on a mixing ratio commonly used in the rubber composition for the tire tread.

Examples of the vulcanizing agent may include a sulfur-based vulcanizing agent, an organic peroxide, a resin vulcanizing agent, and metal oxides such as magnesium oxide and the like.

Examples of the sulfur-based vulcanizing agent may include: an inorganic vulcanizing agent such as a sulfur (S) powder, an insoluble sulfur (S), a precipitated sulfur (S), a colloidal sulfur, or the like; and an organic vulcanizing agent such as tetramethylthiuram disulfide (TMTD), tetraethylthiuram disulfide (TETD), dithiodimorpholine, or the like. Specifically, the sulfur vulcanizing agent may include a vulcanizing agent for preparing element sulfur or sulfur, e.g., amine disulfide, polymer sulfur, or the like.

The organic peroxide may be any one selected from the group consisting of benzoyl peroxide, dicumyl peroxide, di-t-butyl peroxide, t-butylcumyl peroxide, methyl ethyl ketone peroxide, cumene hydroperoxide, 2,5-dimethyl-2,5-di(t-butylperoxy)hexane, 2,5-dimethyl-2,5-di(benzoylperoxy)hexane, 2,5-dimethyl-2,5-di(t-butylperoxy)hexyne-3, 1,3-bis(t-butylperoxypropyl)benzene, di(t-butylperoxy) diisopropyl benzene, t-butylperoxybenzene, 2,4-dichlorobenzoyl peroxide, 1,1-dibutylperoxy-3,3,5-trimethylsiloxane, n-butyl-4,4-di(t-butylperoxy) valerate, and a combination thereof.

The vulcanizing agent included in an amount of 1.5 to 2.5 parts by weight with respect to 100 parts by weight of the raw material rubber is desirable in that the vulcanizing agent makes the raw material rubber less sensitive to heat and allows the raw material rubber to be chemically stable as suitable vulcanizing effects.

The vulcanization accelerator means an accelerator which accelerates vulcanization rate or accelerates delayed action in the initial vulcanization step.

The vulcanization accelerator may be any one selected from the group consisting of a sulfenamide-based vulcanization accelerator, a thiazole-based vulcanization accelerator, a thiuram-based vulcanization accelerator, a thiourea-based vulcanization accelerator, a guanidine-based vulcanization accelerator, a dithiocarbamate-based vulcanization accelerator, an aldehyde amine-based vulcanization accelerator, and an aldehyde ammonia-based vulcanization accelerator, an imidazoline-based vulcanization accelerator, a xanthate-based vulcanization accelerator, and a combination thereof.

Examples of the sulfenamide-based vulcanization accelerator may include any one sulfenamide-based compound selected from the group consisting of N-cyclohexyl-2-benzothiazyl sulfenamide (CBS), N-tert-butyl-2-benzothiazyl sulfenamide (TBBS), N,N-dicyclohexyl-2-benzothiazyl sulfenamide, N-oxydiethylene-2-benothiazyl sulfenamide, N,N-diisopropyl-2-benzothiazole sulfenamide, and a combination thereof.

Examples of the thiazole-based vulcanization accelerator may include any one thiazole-based compound selected from the group consisting of 2-mercaptobenzothiazole (MBT), dibenzothiazyl disulfide (MBTS), sodium salt of 2-mercaptobenzothiazole, zinc salt of 2-mercaptobenzothiazole, copper salt of 2-mercaptobenzothiazole, cyclohexylamine salt of 2-mercaptobenzothiazole, 2-(2,4-dinitrophenyl) mercaptobenzothiazole, 2-(2,6-diethyl-4-morpholinothio) benzothiazole, and a combination thereof.

Examples of the thiuram-based vulcanization accelerator may include any one thiuram-based compound selected from the group consisting of tetramethylthiuram disulfide (TMTD), tetraethylthiuram disulfide, tetramethylthiuram monosulfide, dipentamethylenethiuram disulfide, dipentamethylenethiuram monosulfide, dipentamethylenethiuram tetrasulfide, dipentamethylenethiuram hexasulfide, tetrabutylthiuram disulfide, pentamethylene thiuram tetrasulfide, and a combination thereof.

Examples of the thiourea-based vulcanization accelerator may include any one thiourea-based compound selected from the group consisting of thiocarbamide, diethyl thiourea, dibutyl thiourea, trimethyl thiourea, diorthotolyl thiourea, and a combination thereof.

Examples of the guanidine-based vulcanization accelerator may include any one guanidine-based compound selected from the group consisting of diphenylguanidine, diorthotolyl guanidine, triphenyl guanidine, orthotolyl biguanide, diphenylguanidine phthalate, and a combination thereof.

Examples of the dithiocarbamate-based vulcanization accelerator may include any one dithiocarbamate-based compound selected from the group consisting of zinc ethylphenyldithiocarbamate, zinc butylphenyldithiocarbamate, sodium dimethyldithiocarbamate, zinc dimethyldithiocarbamate, zinc diethyldithiocarbamate, zinc dibutyldithiocarbamate, zinc diamyldithiocarbamate, zinc dipropyldithiocarbamate, a complex salt of zinc pentamethylenedithiocarbamate and piperidine, zinc hexadecylisopropyldithiocarbamate, zinc octadecylisopropyldithiocarbamate, zinc dibenzyldithiocarbamate, sodium diethyldithiocarbamate, piperidine pentamethylenedithiocarbamate, selenium dimethyldithiocarbamate, tellurium diethyldithiocarbamate, cadmium diamyldithiocarbamate, and a combination thereof.

Examples of the aldehyde amine-based or aldehyde ammonia-based vulcanization accelerator may include an aldehyde amine-based or aldehyde ammonia-based compound selected from the group consisting of an acetaldehyde-aniline reactant, a butyl aldehyde-aniline condensate, hexamethylenetetramine, an acetaldehydeammonia reactant, and a combination thereof.

Examples of the imidazoline-based vulcanization accelerator may include an imidazoline-based compound such as 2-mercaptoimidazoline or the like, and examples of the xanthate-based vulcanization accelerator may include a xanthate-based compound such as zinc dibutylxanthate or the like.

The vulcanization accelerator may be included in an amount of 0.5 to 2.0 parts by weight with respect to 100 parts by weight of the raw material rubber to maximize enhancement of productivity and enhancement of rubber properties through acceleration of the vulcanization rate.

The vulcanization acceleration aid, as a compounding agent which is used in combination with the vulcanization accelerator to make an acceleration effect of the vulcanization accelerator perfect, may include any one selected from the group consisting of an inorganic vulcanization acceleration aid, an organic vulcanization acceleration aid, and a combination thereof.

The inorganic vulcanization acceleration aid may include any one selected from the group consisting of zinc oxide (ZnO), zinc carbonate, magnesium oxide (MgO), lead oxide, potassium hydroxide, and a combination thereof. The organic vulcanization acceleration aid may include any one selected from the group consisting of stearic acid, zinc stearate, palmitic acid, linoleic acid, oleic acid, lauric acid, dibutyl ammonium oleate, derivatives thereof, and a combination thereof.

Particularly, the zinc oxide may be used together with the stearic acid as the vulcanization acceleration aid. In this case, a crosslinking reaction of rubber is facilitated by dissolving the zinc oxide in the stearic acid to form an active complex with the vulcanization accelerator, thereby producing sulfur which is advantageous during a vulcanization reaction.

When the zinc oxide is used together with the stearic acid, the zinc oxide and stearic acid may be each used in an amount of 0.8 to 2.0 parts by weight with respect to 100 parts by weight of the raw material rubber to serve as a suitable vulcanization acceleration aid.

The antiaging agent is an additive which is used to stop a chain reaction in which a tire is automatically oxidized by oxygen. The antiaging agent may include any one suitably selected from the group consisting of an amine-based antiaging agent, a phenol-based antiaging agent, a quinolone-based antiaging agent, an imidazole-based antiaging agent, a carbamate metal salt, wax, and a combination thereof.

The amine-based antiaging agent may be any one selected from the group consisting of N-phenyl-N'-(1,3-dimethyl)-p-phenylenediamine, N-(1,3-dimethylbutyl)-N'-phenyl-p-phenylenediamine, N-phenyl-N'-isopropyl-p-phenylenediamine, N,N'-diphenyl-p-phenylenediamine, N,N'-diaryl-p-phenylenediamine, N-phenyl-N'-cyclohexyl-p-phenylenediamine, N-phenyl-N'-octyl-p-phenylenediamine, and a combination thereof. The phenol-based antiaging agent may be any one selected from the group consisting of 2,2'-methylene-bis(4-methyl-6-tert-butylphenol), 2,2'-isobutylidene-bis(4,6-dimethylphenol), 2,6-di-tert-butyl-p-cresol, and a combination thereof. Examples of the quinolone-based antiaging agent may include 2,2,4-trimethyl-1,2-dihydroquinoline and its derivatives, and specifically may be any one selected from the group consisting of 6-ethoxy-2,2,4-trimethyl-1,2-dihydroquinoline, 6-anilino-2,2,4-trimethyl-1,2-dihydroquinoline, 6-dodecyl-2,2,4-trimethyl-1,2-dihydroquinoline, and a combination thereof. The wax may preferably be a waxy hydrocarbon.

The antiaging agent may be included in an amount of 1 to 5 parts by weight with respect to 100 parts by weight of the raw material rubber considering conditions that the antiaging agent should have high solubility in rubber in addition to an antiaging effect, should be low in volatility and inactive to rubber, and should not hinder vulcanization.

The softener, which is added to the rubber composition such that the softener gives plasticity to rubber to facilitate processing or lowers hardness of rubber, means oils and other materials that are used when mixing or manufacturing rubber. The softener means oils included in process oil or other rubber compositions. Although the softener may be any one selected from the group consisting of a petroleum-based oil, a vegetable fat and oil, and a combination thereof, the softener is not limited thereto in the present invention.

The petroleum-based oil may be any one selected from the group consisting of a paraffinic oil, a naphthenic oil, an aromatic oil, and a combination thereof.

Typical examples of the paraffinic oil may include P-1, P-2, P-3, P-4, P-5 and P-6 of Michang Oil Industry Co., Ltd, and others. Typical examples of the naphthenic oil may include N-1, N-2 and N-3 of Michang Oil Industry Co., Ltd, and others. Typical examples of the aromatic oil may include A-2 and A-3 of Michang Oil Industry Co., Ltd, and others.

However, it has recently been known along with an upsurge in environmental awareness that a cancer causing possibility is high when polycyclic aromatic hydrocarbons (hereinafter, referred to as "PAHs") are included in an amount of 3 wt% or more in the aromatic oil. Therefore, a treated distillate aromatic extract (TDAE) oil, a mild extraction solvate (MES) oil, a residual aromatic extract (RAE) oil or a heavy naphthenic oil may be preferably used as the aromatic oil.

Particularly, the oil used as the softener is preferably the TDAE oil which has 3 wt% or less of a total content of a PAHs component with respect to the total oil and a kinematic viscosity of 95 or more (210 °F SUS), and includes 15 to 25 wt% of an aromatic component, wjdhsxmrtjd27 to 37 wt% of a naphthenic component and 38 to 58 wt% of a paraffinic component contained in the softener.

The TDAE oil not only enables a tire tread including the TDAE oil to maintain excellent low-temperature properties and mileage performance, but also has characteristics beneficial to environmental factors such as the cancer causing possibility of PAHs.

The vegetable fat and oil may be any one selected from the group consisting of castor oil, cottonseed oil, linseed oil, canola oil, soybean oil, palm oil, coconut oil, peanut oil, pine oil, pine tar, tall oil, corn oil, rice bran oil, safflower oil, sesame oil, olive oil, sunflower oil, palm kernel oil, camellia oil, jojoba oil, macadamia nut oil, safflower oil, China wood oil, and a combination thereof.

The rubber composition for the tire tread may be prepared through a general continuous preparation process of two steps. That is, the rubber composition for the tire tread may be prepared in a suitable mixer through a first step (which is called as "non-production" step) of performing a thermomechanical treatment or kneading process at a maximum temperature ranging from 110 to 190 °C, preferably at a high temperature of 130 to 180 °C, and a second step (which is called as "production" step) of performing a mechanical treatment process typically at less than 110 °C, e.g., at a low temperature of 40 to 100 °C during a finishing step of mixing a cross-linking system. However, the present invention is not limited thereto.

According to another embodiment of the present invention, a tire manufactured using the rubber composition for the tire tread is provided.

Since any methods are applicable as a method of manufacturing the tire if the methods are general methods which are used in manufacturing of the tire except that the rubber composition for the tire tread is used, detailed description is omitted in the present specification. However, the tire may be a tire including the tire tread manufactured using the rubber composition for the tire tread.

Although the tire may be a car tire, a racing tire, an airplane tire, an agricultural tire, an off-road tire, a truck tire, a bus tire or the like, the tire is not limited thereto.

Hereinafter, exemplary embodiments of the present invention will be described in detail to enable those skilled in the art to easily implement the present invention. However, the present invention can be implemented in various different forms and is not limited to the embodiments described herein.

### [Preparation Example: Preparation of rubber composition]

Rubber compositions for tire treads according to the following Examples and Comparative Examples were prepared using compositions as shown in the following Table 1. The rubber compositions for the tire treads were prepared by a general method of preparing the rubber composition, and a method of preparing the rubber compositions for the tire treads is not particularly limited.

**[Table 1]**

| | Comparative Example 1 | Comparative Example 2 | Comparative Example 3 | Example 1 | Example 2 | Example 3 |
|---|---|---|---|---|---|---|
| SBR1⁽¹⁾ | 60 | - | 60 | 40 | 30 | 30 |
| SBR2⁽²⁾ | - | 70 | - | 30 | 40 | 40 |
| BR⁽³⁾ | 40 | 30 | 40 | 30 | 30 | 30 |
| Silica⁽⁴⁾ | 100 | 100 | 100 | 100 | 100 | 100 |
| Natural oil⁽⁵⁾ | 20 | 20 | - | 20 | 20 | 30 |
| Hydrocarbon resin⁽⁶⁾ | 20 | 20 | 20 | 20 | 20 | 15 |
| Zinc oxide | 3 | 3 | 3 | 3 | 3 | 3 |
| Stearic acid | 1 | 1 | 1 | 1 | 1 | 1 |
| Antiaging agent | 2 | 2 | 2 | 2 | 2 | 2 |
| Process oil⁽⁷⁾ | 10 | 10 | 10 | 10 | 10 | 10 |
| Sulfur | 1.5 | 1.5 | 1.5 | 1.5 | 1.5 | 1.5 |
| Accelerator⁽⁸⁾ | 1 | 1 | 1 | 1 | 1 | 1 |
| Unit: parts by weight | | | | | | |
| (1) SBR1: First styrene butadiene rubber having Tg of -33 °C and including 38 wt% of | | | | | | |
| styrene and 24 wt% of vinyl | | | | | | |
| (2) SBR2: Second styrene butadiene rubber having Tg of -61 °C and including 15 wt% of styrene and 25 wt% of vinyl | | | | | | |
| (3) BR: Neodymium butadiene rubber (Nd-BR) having Tg of -10 °C | | | | | | |
| (4) Silica: Silica having an adsorption specific surface area of CTAB of 153 to 177 m²/g and an adsorption specific surface area of nitrogen of 160 to 190 m²/g | | | | | | |
| (5) Natural oil: Soybean oil | | | | | | |
| (6) Hydrocarbon resin: Aromatic modified terpene resin | | | | | | |
| (7) Process oil: Treated distillate aromatic extract (TDAE) oil | | | | | | |
| (8) Accelerator: CBZ(CZ, N-CYCLOHEXYL-2-BENZOTHIAZOLE SULFENAMIDE) | | | | | | |

### [Experimental Example 1: Measuring physical properties of prepared rubber compositions]

After measuring physical properties of sheet rubbers manufactured using the rubber compositions prepared in the foregoing Examples and Comparative Examples, measurement results are shown in the following Table 2.

**[Table 2]**

| Items | Comparative Example 1 | Comparative Example 2 | Comparative Example 3 | Example 1 | Example 2 | Example 3 |
|---|---|---|---|---|---|---|
| Mooney viscosity (On the day of mixing, 100 °C) | 80 | 70 | 76 | 70 | 75 | 75 |
| Tmax (150 °C) | 21.6 | 19 | 19.3 | 19.1 | 21.8 | 20.5 |
| t90 (150 °C) | 14.5 | 14.1 | 14.3 | 14.1 | 14.3 | 14.5 |
| Hardness (Shore A) | 65 | 66 | 65 | 65 | 65 | 66 |
| 300% modulus (kgf/cm²) | 70 | 75 | 67 | 65 | 65 | 72 |
| -30 °C G'(10E+7) | 15 | 7 | 18 | 12 | 10 | 8 |
| 0 °C tanδ | 0.219 | 0.185 | 0.223 | 0.225 | 0.222 | 0.220 |
| 60 °C tanδ | 0.150 | 0.138 | 0.147 | 0.145 | 0.140 | 0.140 |

| | | | | | | |
|---|---|---|---|---|---|---|
| - Mooney viscosity (ML1+4(100 °C)) values were measured in accordance with ASTM standard D1646. - Hardness (Shore A) values were measured in accordance with DIN 53505. - 300% modulus values, as tensile strength values at 300% elongation, were measured in accordance with ISO 37 standard. - G', G" and tanδ as viscoelasticity values were measured at 5% strain in a temperature range of -60 °C to 60 °C under 10 Hz frequency by using an ARES measuring device. | | | | | | |

Mooney viscosity, as an index showing processability, means that the higher numerical values of Mooney viscosity are, the greater viscosity values of rubber are, and represents that the lower the numerical values of Mooney viscosity are, the more excellent processability values of unvulcanized rubber are. Hardness, as an index showing adjustment stability, represents that the higher numerical values of hardness are, the more excellent adjustment stability performance values are. 300% modulus represents that the higher numerical values of 300% modulus are, the more excellent tensile property and strength values are. -30 °C G', as an index showing braking properties on the ice and snow road surface, represents that the lower numerical values of -30 °C G' are, the more excellent braking performance values are. 0 °C tanδ, as an index showing braking properties on a dry road surface or wet road surface, represents that the higher numerical values of 0 °C tanδ are, the more excellent braking performance values are, and 60 °C tanδ, as an index showing rotational resistance properties, exhibits that the lower numerical values of 60 °C tanδ are, the more excellent performance values are.

Referring to the results of Table 2, it can be seen that performance values on the ice and snow road surface will be improved by reducing -30 °C dynamic modulus G' values in Examples 1 to 3 to which a combination of the first styrene butadiene rubber with a high Tg and the second styrene butadiene rubber with a low Tg is applied compared to Comparative Example 1 including the first styrene butadiene rubber with the high Tg, and that performance values on the wet road surface will be improved by increasing 0 °C tanδ values in Examples 1 to 3 compared to Comparative Example 2 including the second styrene butadiene rubber with the low Tg. Particularly, performance values on the wet road surface or the ice and snow road surface are expected to be improved since an increment of 0 °C tanδ values is large in Example 3 compared to Comparative Example 2 although -30 °C dynamic modulus G' value of Example 3 is the same level as that of Comparative Example 2.

### [Experimental Example 2: Evaluating performance values when applying to a tire]

After manufacturing treads using the rubber compositions of Comparative Examples and Examples and manufacturing 225/55R17 standardized tires including the treads as semi-finished products, relative ratio values of braking distance performance for the tires on the wet road surface or the ice and snow road surface are shown in Table 3. The relative ratio values have a great effect on improvement or reduction in the braking distance performance when the relative ratio values have a variation width of 5% or more. That is, the braking performance values are levels at which it is difficult to apply the rubber compositions to the tire treads due to insufficient performance values of the tires when braking performance values are 95 or less. The braking performance values are levels which exhibit a significant effect of improving performance when the braking performance values are 105 or more.

**[Table 3]**

| | Comparative Example 1 | Comparative Example 2 | Comparative Example 3 | Example 1 | Example 2 | Example 3 |
|---|---|---|---|---|---|---|
| Braking performance on the wet road surface | 100 | 91 | 98 | 107 | 105 | 105 |
| Braking performance on the ice and snow road surface | 100 | 111 | 95 | 106 | 108 | 110 |

Referring to the results of Table 3, it could be confirmed that Examples 1 to 3 to which a combination of the first styrene butadiene rubber with a high Tg and the second styrene butadiene rubber with a low Tg is applied not only exhibit a considerably excellent braking performance effect on the wet road surface, but also exhibit the considerably excellent braking performance effect on the ice and snow road surface compared to Comparative Example 1.

Hereinabove, preferred embodiments of the present invention have been described in detail. However, the scope of the right of the present invention is not limited thereto. The above-disclosed subject matter is to be considered illustrative, and not restrictive, and the appended claims are intended to cover all such modifications, enhancements, and other embodiments, which fall within the true spirit and scope of the present invention. Thus, to the maximum extent allowed by law, the scope of the present invention is to be determined by the broadest permissible interpretation of the following claims and their equivalents, and shall not be restricted or limited by the foregoing detailed description.

## Claims

1. A rubber composition for a tire tread, the rubber composition comprising:
a raw material rubber including 20 to 50 parts by weight of a first styrene butadiene rubber, 20 to 50 parts by weight of a second styrene butadiene rubber, and 10 to 40 parts by weight of a butadiene rubber (BR);
wherein the first styrene butadiene rubber has a glass transition temperature (Tg) of -40 °C or higher, and includes 30 to 50 wt% of styrene and 10 to 30 wt% of vinyl,
wherein the second styrene butadiene rubber has a glass transition temperature (Tg) of -60 °C or lower, and includes 5 to 20 wt% of styrene and 20 to 40 wt% of vinyl, and
80 to 180 parts by weight of a reinforcing filler, 2 to 50 parts by weight of a natural oil, and 2 to 30 parts by weight of a hydrocarbon resin with respect to 100 parts by weight of the raw material rubber.

2. The rubber composition for the tire tread of claim 1, wherein the reinforcing filler includes 10 to 40 parts by weight of carbon black and 40 to 170 parts by weight of silica with respect to 100 parts by weight of the raw material rubber.

3. The rubber composition for the tire tread of claim 2, wherein the silica is a precipitated silica having an adsorption specific surface area of cetyltrimethylammonium bromide (CTAB) of 150 to 180 m²/g and an adsorption specific surface area of nitrogen of 160 to 190 m²/g.

4. The rubber composition for the tire tread of claim 1, wherein the natural oil is any one selected from the group consisting of soybean oil, modified soybean oil, sunflower oil, modified sunflower oil, canola oil, modified canola oil, rapeseed oil, modified rapeseed oil, and a mixture thereof.

5. The rubber composition for the tire tread of claim 1, wherein the hydrocarbon resin is any one selected from the group consisting of a coumarone-indene resin, a terpene resin, a terpene-phenol resin, an aromatic modified terpene resin, a phenol-formaldehyde resin, a C₅-C₉ aliphatic hydrocarbon resin, a C₇-C₉ aromatic hydrocarbon resin, a copolymer resin, and a mixture thereof.

6. A tire including the rubber composition for the tire tread according to claim 1.

## Patentansprüche

1. Kautschukzusammensetzung für eine Reifenlauffläche, wobei die Kautschukzusammensetzung umfasst:
einen Rohkautschuk, umfassend 20 bis 50 Gewichtsanteile eines ersten Styrol-Butadien-Kautschuks, 20 bis 50 Gewichtsanteile eines zweiten Styrol-Butadien-Kautschuks und 10 bis 40 Gewichtsanteile eines Butadien-Kautschuks (BR);
worin der erste Styrol-Butadien-Kautschuk eine Glasübergangstemperatur (Tg) von -40°C oder mehr hat, und 30 bis 50 Gew.-% Styrol und 10 bis 30 Gew.-% Vinyl umfasst,
worin der zweite Styrol-Butadien-Kautschuk eine Glasübergangstemperatur (Tg) von -60°C oder weniger hat, und 5 bis 20 Gew.-% Styrol und 20 bis 40 Gew.-% Vinyl umfasst, und
80 bis 180 Gewichtsanteile eines Verstärkungsfüllstoffs, 2 bis 50 Gewichtsanteile eines natürlichen Öls und 2 bis 30 Gewichtsanteile eines Kohlenwasserstoffharzes im Hinblick auf 100 Gewichtsanteile des Rohkautschuks.

2. Kautschukzusammensetzung für die Reifenlauffläche nach Anspruch 1, worin der Verstärkungsfüllstoff 10 bis 40 Gewichtsanteile an Ruß und 40 bis 170 Gewichtsanteile an Siliziumdioxid im Hinblick auf 100 Gewichtsanteile des Rohkautschuks umfasst.

3. Kautschukzusammensetzung für die Reifenlauffläche nach Anspruch 2, worin das Siliziumdioxid ein gefälltes Siliziumdioxid mit einer spezifischen Cetyltrimethylammoniumbromid(CTAB)-Adsorptionsoberfläche von 150 bis 180 m²/g und einer spezifischen Stickstoff-Adsorptionsoberfläche von 160 bis 190 m²/g ist.

4. Kautschukzusammensetzung für die Reifenlauffläche nach Anspruch 1, worin das natürliche Öl irgendeines ist, das aus der Gruppe ausgewählt ist, die aus Sojaöl, modifiziertem Sojaöl, Sonnenblumenöl, modifiziertem Sonnenblumenöl, Rapsöl, modifiziertem Rapsöl, Rübsenöl, modifiziertem Rübsenöl und einer Mischung davon besteht.

5. Kautschukzusammensetzung für die Reifenlauffläche nach Anspruch 1, worin das Kohlenwasserstoffharz irgendeines ist, das aus der Gruppe ausgewählt ist, die aus einem Cumaron-Inden-Harz, einem Terpenharz, einem Terpenphenolharz, einem aromatischen modifizierten Terpenharz, einem Phenol-Formaldehydharz, einem C₅-C₉ aliphatischen Kohlenwasserstoffharz, einem C₇-C₉ aromatischen Kohlenwasserstoffharz, einem Copolymerharz und einer Mischung davon besteht.

6. Reifen umfassend die Kautschukzusammensetzung für die Reifenlauffläche nach Anspruch 1.

## Revendications

1. Composition de caoutchouc pour une bande de roulement de pneu, la composition de caoutchouc comprenant :
une matière première caoutchouc comprenant 20 à 50 parties en poids d'un premier caoutchouc de styrène-butadiène, 20 à 50 parties en poids d'un second caoutchouc de styrène butadiène, et 10 à 40 parties en poids d'un caoutchouc de butadiène (BR) ;
dans lequel le premier caoutchouc styrène-butadiène a une température de transition vitreuse (Tg) de -40°C ou plus, et comprend 30 à 50 % en poids de styrène et 10 à 30 % en poids de vinyle,
dans lequel le second caoutchouc styrène-butadiène a une température de transition vitreuse (Tg) de -60°C ou moins, et comprend 5 à 20 % en poids de styrène et 20 à 40 % en poids de vinyle, et
80 à 180 parties en poids d'une charge de renforcement, 2 à 50 parties en poids d'une huile naturelle, et 2 à 30 parties en poids d'une résine d'hydrocarbure par rapport à 100 parties en poids de la matière première caoutchouc.

2. Composition de caoutchouc pour la bande de roulement du pneu selon la revendication 1, dans laquelle la charge de renforcement comprend 10 à 40 parties en poids de noir de carbone et 40 à 170 parties en poids de silice par rapport à 100 parties en poids de la matière première caoutchouc.

3. Composition de caoutchouc pour la bande de roulement de pneu selon la revendication 2, dans laquelle la silice est une silice précipitée ayant une surface spécifique d'adsorption de bromure de cétyltriméthylammonium (CTAB) de 150 à 180 m²/g et une surface spécifique d'absorption d'azote de 160 à 190 m²/g.

4. Composition de caoutchouc pour la bande de roulement de pneu selon la revendication 1, dans laquelle l'huile naturelle est l'une quelconque choisie dans le groupe constitué par l'huile de soja, l'huile de soja modifiée, l'huile de tournesol, l'huile de tournesol modifiée, l'huile de canola, l'huile de canola modifiée, l'huile de colza, l'huile de colza modifié, et un mélange de celles-ci.

5. Composition de caoutchouc pour la bande de roulement de pneu selon la revendication 1, dans laquelle la résine d'hydrocarbure est l'une quelconque choisie dans le groupe constitué par une résine coumarone-indène, une résine terpène, une résine terpène-phénol, une résine terpène modifiée aromatique, une résine phénol-formaldéhyde, une résine aliphatique en C₅-C₉, une résine d'hydrocarbure aromatique en C₇-C₉, une résine copolymère et un mélange de celles-ci.

6. Pneu comprenant la composition de caoutchouc pour la bande de roulement du pneu selon la revendication 1.
